# EUROPEAN PATENT APPLICATION

(11) **EP 3 760 161 A1**
(43) Date of publication of application: **06.01.2021**
(21) Application number: 19184450.5
(22) Date of filing: 04.07.2019
(51) Int. Cl.: A61C 17/02, B05B 9/00

(54) **DENTAL WATER JET**

(71) Applicant: Shenzhen Wentong Electronics Co., Ltd., Shenzhen, Guangdong (CN)
(72) Inventor: Ma, Hongjia, Shantou, Guangdong (CN)
(74) Representative: Longoni, Alessandra

(57) **Abstract**

This invention refers to a dental water jet in the field of oral care. It comprises main body, water tank, and protective cover. The main body is connected to spray nozzle and detachable water tank at the top. The water tank covers the spray nozzle to avoid damage and pollution of spray nozzle, which has upgraded cleaning level of dental water jet. The main body has a telescopic inlet tube at the lower part and a protective cover at the bottom. The protective cover covers the telescopic inlet tube to protect the tube from being damaged and polluted. The main body is linked with the water tank at the bottom in a detectable way, and the telescopic inlet tube is inserted into the bottom of the water tank. Water flows into the main body through telescopic inlet tube to clean teeth after being sprayed from nozzle. The advantages of this invention are as follows: simple structure, small size, portable, high cleaning level and easy to promote.

## Description

### Technical field

This invention refers to a dental water jet in the field of oral care.

### Technical background

Oral irrigator, a new oral cleaning device, is also a popular household hygienic product in Europe and America. Oral irrigator is comprised of a main body with a pump, water tank connected to main body, straw module connected to inlet of pump inside water tank, and spray module connected to outlet of pump. Such oral irrigator is huge, heavy, expensive and not portable in travel.

### Contents of Invention

This invention is intended to provide a dental water jet to address problems mentioned in technical background.

To achieve the aims above, this invention puts forward technical scheme as follows:
The dental water jet comprises main body, water tank, and protective cover. The main body is connected to spray nozzle and water tank at the top. The water tank covers the spray nozzle to avoid damage and pollution of spray nozzle, which has upgraded cleaning level of dental water jet. The main body has a telescopic inlet tube at the lower part and a protective cover at the bottom. The protective cover covers the telescopic inlet tube to protect the tube from being damaged and polluted. The main body is linked with the water tank at the bottom in a detectable way, and the telescopic inlet tube is inserted into the bottom of the water tank. Under the action of main body, water flows into the main body through telescopic inlet tube to clean teeth after being sprayed from nozzle.

According to the improved scheme of this invention, the main body is screwed with the water tank at the top, and the protective cover at the bottom. Both the screws have the same standards. The water tank is screwed with the bottom of the main body.

According to the improved scheme of this invention, the main body is furnished with a rotary strut at the top, which is connected to the spray nozzle. The rotary strut and the rotation of the spray nozzle enables the spray nozzle to stretch out and withdraw. Characterized by simple operation, the spray nozzle can be kept well when withdrawing.

According to the improved scheme of this invention, the rotary strut is connected to the detachable spray nozzle.

As compared with existing technology, the beneficial effects of this invention are as follows: the water tank will change into protective cover when being carried, which not only shows a nicer product but also protects spray nozzle from being damaged; in addition, the product is smaller, occupying less space. Due to its rotary movement, the spray nozzle can be used conveniently when stretching out, and it can be kept well when withdrawing. Water tank and protective cover cover the spray nozzle and the telescopic inlet tube so as to protect the nozzle from being damaged and polluted. This can help to upgrade cleaning level of dental water jet. The advantages of this invention are as follows: simple structure, small size, portable, high cleaning level and easy to promote.

### Explanations on Figures

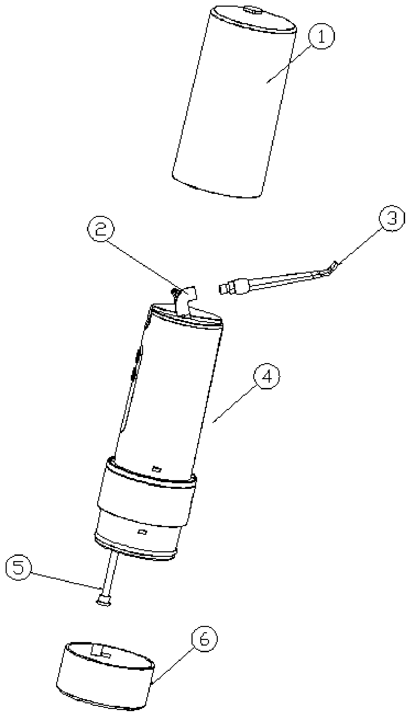

Figure 1: Structural diagram of dental water jet
In the figure, water tank - 1, rotary strut - 2, spray nozzle - 3, main body - 4, telescopic inlet tube - 5, protective cover - 6

### Specific implementation mode

To understand technical characteristics, purposes and effects of this invention more clearly, this invention is explained according to figures.

### Example 1

According to Figures 1, the dental water jet comprises main body (4), water tank (1), and protective cover (6). The main body (4) is connected to a spray nozzle (3) and screwed with the water tank (1) at the top. The water tank (1) covers the spray nozzle (3) to avoid damage and pollution of spray nozzle (3), which has upgraded cleaning level of dental water jet. The main body (4) comprises a telescopic inlet tube (5) at the lower part and the protective cover (6) at the bottom. The protective cover (6) covers the telescopic inlet tube (5) to protect it from being damaged and polluted. Both the screw threads at the top and the bottom of the main body (4) have the same standards. The main body (4) is linked with the water tank at the bottom in a detectable way. When used, water tank (1) is filled with water and the telescopic inlet tube (5) is inserted into the bottom of the water tank (1). Under the action of main body (4), water flows into the main body (4) through telescopic inlet tube (5) to clean teeth after being sprayed from nozzle (3).

The working principle of this invention: when using the dental water jet, screw off the water tank (1) and the protective cover (6); water tank (1) shall be filled with water and the telescopic inlet tube (5) shall be inserted into the bottom of the water tank (1). Under the action of main body (4), water may flow into the main body (4) through telescopic inlet tube (5) to clean teeth after being sprayed from nozzle (3). After cleaning, water tank (1) and protective cover (6) shall be screwed to the top and bottom of the main body (4).

### Example 2

Based on example 1, the main body (4) is furnished with a rotary strut (2) at the top, which is detachably connected to the spray nozzle (3). The rotary strut (2) and the rotation of the spray nozzle (3) enables the spray nozzle (3) to stretch out and withdraw. Characterized by simple operation, the spray nozzle can be kept well when withdrawing.

The examples above are the preferential implementation modes of this invention, which are described in a specific and detailed way. However, it doesn't mean that they are constraints over the patent scope of this invention. It is worth noticing that on the premise of following the thoughts of this invention, any modifications, improvements and substitutions from ordinary technicians in this field shall fall within the protective scope of this invention. Thus, the protective scope of this invention shall be subject to claims described herein.

## Claims

1. The dental water jet comprises main body (4), a water tank (1), and a protective cover (6); the main body (4) is connected to a spray nozzle (3) and to the water tank (1) at the top; the main body (4) has a telescopic inlet tube (5) at the lower part and the protective cover (6) at the bottom.

2. The dental water jet as claimed in claim 1, wherein the main body (4) is screwed with the water tank (1) at the top, and with the protective cover (6) at the bottom; both the screws having the same standards.

3. The dental water jet as claimed in claim 1 or claim 2, wherein the main body (4) is furnished with a rotary strut (2) at the top, which is connected to the spray nozzle (3).

4. The dental water jet as claimed in claim 3, wherein the rotary strut (2) is detachably connected to the spray nozzle (3).
